# EUROPÄISCHE PATENTSCHRIFT

(11) **EP 2 713 088 B1**
(45) Veröffentlichungstag und Bekanntmachung des Hinweises auf die Patenterteilung: **10.04.2019**
(21) Anmeldenummer: 13003295.6
(22) Anmeldetag: 28.06.2013
(51) Int. Cl.: F16L 25/14, F16L 21/02, F16L 37/02, F16L 27/113

(54) **Steckstück**
Plug-in piece
Pièce enfichable

(30) Priorität: 28.09.2012 DE 102012019105
(43) Veröffentlichungstag der Anmeldung: 02.04.2014
(73) Patentinhaber: Carl Freudenberg KG, 69469 Weinheim (DE)
(72) Erfinder: Unger, Hans, 69518 Absteinach (DE); Heldmann, Ralf, 69483 Wald-Michelbach (DE); Stephan, Ingo, 64668 Rimbach (DE); Clemens, Markus, 64385 Reicheisheim (DE); Hartmann, Carsten, 69493 Hirschberg (DE); Jakob, Ernst, 64668 Rimbach (DE); Reddig, Stephan, 67659 Kaiserslautern (DE)

(56) Entgegenhaltungen:
- US-A1- 2010 207 332
- US-B1- 6 439 620

## Beschreibung

### Technisches Gebiet

Die Erfindung betrifft ein Steckstück zum dichtenden Verbinden zweier einander zugeordneter Zylinderflächen, umfassend einen im Wesentlichen hohlkörperförmigen Stützkörper, welcher wenigstens ein ringförmig umlaufendes Dichtelement aufweist, das zur Herstellung einer dichten Verbindung mit einer der abzudichtenden Zylinderflächen in Eingriff bringbar ist, wobei das Dichtelemente als auf der Außenfläche des Stützkörpers ringförmig umlaufender Dichtwulst mit einer gewölbten Dichtfläche ausgebildet ist.

### Stand der Technik

Steckstücke werden in der Regel dazu verwendet, zwei einander zugeordnete Gehäuseteile, wie z. B. einen Motorblock mit Nebenaggregaten mediendicht miteinander zu verbinden. Sie bestehen in der Regel aus einem rohr- oder hülsenförmigen Stützkörper aus einem zähharten Werkstoff, der an seinen beiderseitigen Enden am Außen- und/oder Innenumfang mit ringförmig umlaufenden Dichtelementen aus einem gummielastischen Werkstoff versehen ist. Die Steckstücke werden zum Verbinden der Gehäuseteile mit ihren Enden in entsprechende Bohrungen der Gehäuseteile eingeführt bzw. auf entsprechende Rohrstutzen aufgesteckt.

Beim Einführen der Enden des hülsenförmigen Stützkörpers in die jeweiligen Bohrungen der Gehäuseteile bzw. eines Rohrstutzens in das Steckstück legen sich die Dichtelemente aus gummielastischem Werkstoff dichtend an die Innenwände der Bohrungen bzw. die Außenwand des Rohrstutzens an und stellen somit eine mediendichte Verbindung zwischen den beiden Gehäuseteilen her.

Ein Steckstück der gattungsgemäßen Art ist zum Beispiel aus der EP 1 024 322 A2 bekannt. Das bekannte Steckstück weist an seinen beiden Enden jeweils einen Dichtwulst mit einer gewölbten Oberfläche auf. Der gewölbte Dichtwulst gewährleistet ein sicheres dichtendes Anliegen an der Innenfläche der Bohrung auch dann, wenn die Längsachsen der Bohrungen und des Steckstücks einen Winkelversatz zueinander aufweisen.

US 2010/207332 A1 offenbart ein Steckstück zum dichtenden Verbinden zweier einander zugeordneter Zylinderflächen, umfassend einen im Wesentlichen hohlkörperförmigen Stützkörper, welcher wenigstens ein ringförmig umlaufendes Dichtelement aufweist, das zur Herstellung einer dichten Verbindung mit einer der abzudichtenden Zylinderflächen in Eingriff bringbar ist, wobei das Dichtelemente als auf der Außenfläche des Stützkörpers ringförmig umlaufender Dichtwulst mit einer gewölbten Dichtfläche ausgebildet ist.

Nachteilig an den bekannten Steckstücken ist, dass in Abhängigkeit von der radialen Erstreckung des Dichtwulstes nach außen bei der Montage des Steckstücks relativ hohe Einpresskräfte nötig sind.

### Darstellung der Erfindung

Die Aufgabe der Erfindung besteht darin, ein Steckstück der gattungsgemäßen Art so weiterzubilden, dass es ohne Verlust an Dichtigkeit leichter, d. h. mit geringeren Einpresskräften, montierbar ist.

Diese Aufgabe wird mit einem Steckstück mit allen Merkmalen des Patenanspruchs 1 gelöst. Vorteilhafte Ausgestaltungen der Erfindung werden in den Unteransprüchen beschrieben.

Das erfindungsgemäße Steckstück zum dichtenden Verbinden zweier einander zugeordneter Zylinderflächen umfasst einen im Wesentlichen hohlkörperförmigen Stützkörper, welcher wenigstens ein ringförmig umlaufendes Dichtelement aufweist, das zur Herstellung einer dichten Verbindung mit einer der abzudichtenden Zylinderflächen in Eingriff bringbar ist, wobei das Dichtelement als auf der Außenfläche des Stützkörpers ringförmig umlaufender Dichtwulst mit einer gewölbten Dichtfläche ausgebildet ist. Erfindungsgemäß ist vorgesehen, dass der ringförmig umlaufende Dichtwulst im Bereich seiner gewölbten Dichtfläche eine seiner Kontur folgende umlaufende Rillierung aufweist, wobei die Rillierung im Bereich der die Dichtfläche bildenden gewölbten Oberfläche des Dichtwulstes eingebracht ist.

Es hat sich gezeigt, dass eine auf der gewölbten Oberfläche des Dichtwulstes dessen Kontur folgende umlaufende Rilliering zu einer Verminderung der axialen Einbaukräfte beim Einpressen des Steckstücks in einen zylinderförmigen Hohlkörper bzw. in eine Bohrung, führt. Dies Ergebnis tritt ein, obwohl zu erwarten ist, dass die Anpresskräfte, die durch die Innenwand des Hohlkörpers bzw. der Bohrung auf die Erhebungen des Dichtwulstes zwischen den Rillen einwirken, höher sind, als im Falle eines nicht rillierten Wulstes.

Die Rillen werden erfindungsgemäß im Bereich der Dichtfläche des Dichtwulstes eingebracht. Die Dichtfläche des Dichtwulstes umfasst im Sinne dieser Erfindung die maximal mögliche Kontaktfläche des Dichtwulstes mit der abzudichtenden Zylinderfläche. Insbesondere umfasst sie auch die Flächenbereiche, die bei einem Abrollen des Wulstes bei Winkelversatz des Steckstücks und der abzudichtenden Zylinderfläche mit der Zylinderfläche in Kontakt kommen können.

Die geometrische Gestalt der Rillen kann in weiten Grenzen frei gewählt werden. Prinzipiell gilt aber, dass viele, schmale und flache Rillen zu einer Annäherung der Einbaukräfte an die eines glatten Dichtwulstes führen. So ergeben sich beispielsweise bei einer lamellenartigen Rillenstruktur, bei welcher der Dichtwulst im Längsschnitt die Kontur eines orthogonalen Mäanders aufweist, wesentlich höhere Einbaukräfte als bei einer abgerundeten Kontur.

Geringste Einbaukräfte werden erhalten, wenn die Rillen so gestaltet werden, dass der Dichtwulst im Längsschnitt eine wellenförmige Außenkontur aufweist.

Die Höhe, Breite und der Abstand zwischen den Rillen sind in Abhängigkeit von der Größe des Durchmessers des Steckstücks und von der jeweiligen Einbausituation zu wählen. Der Fachmann ist in der Lage, ohne erfinderisches Zutun geeignete Abmessungen aufzufinden.

Unter Berücksichtigung der oben angegebenen bevorzugten Bereichen für die Breite und den Abstand der Rillen weist ein erfindungsgemäßes Steckstück vorzugsweise 2 bis 6 Rillen, besonders bevorzugt 2 bis 4 Rillen auf. Der erfindungsgemäße Effekt tritt aber auch schon beim Vorhandendsein nur einer einzigen Rille ein. Eine "Rillierung" umfasst daher im Sinne der Erfindung sowohl eine einzige auf dem Dichtwulst in einer Ebene senkrecht zur Symmetrieachse umlaufende Rille als auch mehrere solche axial voneinander beabstandete Rillen.

Gemäß einer weiteren bevorzugten Ausführungsform der Erfindung ist der Dichtwulst kugelförmig ausgebildet. Dies hat den Vorteil, dass der Dichtwulst im Falle eines Winkelversatzes des Steckstücks und der abzudichtenden Zylinderfläche auf der Zylinderfläche abrollen kann.

Besonders bevorzugt ist hierbei der Kugelradius des Dichtwulstes so gewählt, dass der Kugel-Mittelpunkt in etwa auf der Symmetrieachse des Stützkörpers liegt. In diesem Fall sind die Anpresskräfte im Einbauraum unabhängig von der Winkelstellung über die gesamte Oberfläche des Dichtwulstes weitgehend konstant.

Vorzugsweise beträgt die Abweichung des Kugelmittelpunkts von der Symmetrieachse des Stützelementes weniger als 10 % des Kugelradius, d. h. des Außendurchmessers des Dichtwulstes. Bei Abweichungen größer als 10 % können bei extremen Winkelstellungen variierende Anpresskräfte auftreten. Besonders bevorzugt beträgt die Abweichung nur etwa 2 % des Kugelradius. Eine Abweichung von weniger als 2 % ist aufgrund der Fertigungstoleranzen, die bei üblichen Steckstückgeometrien eine Mittelpunktsbestimmung im Werkzeug nur mit einem Fehler von bis zu 0,5 % bis 1 % des Außendurchmessers erlauben, nur schwer möglich.

Gemäß einer weiteren bevorzugten Ausrührungsform der Erfindung weist der Stützkörper an einen weiteren, auf dem Außenumfang des Stützkörpers umlaufenden Dichtwulst auf. Dieses Steckstück ist geeignet, zwei einander zugeordnete Bohrungen dichtend miteinander zu verbinden. Die beiden Dichtwülste sind in der Regel den beiden Endbereichen des Stützkörpers zugeordnet.

Vorzugsweise weisen solche Steckstücke zum Verbinden von Hohlkörpern bzw. Bohrungen mit gleichem Innendurchmesser eine Hantelform auf, wobei der erste und der zweite Dichtwulst an den beiden Enden zueinander spiegelbildlich ausgebildet sind.

Das erfindungsgemäße Steckstück kann auch bei zu verbindenden Zylinderflächen mit unterschiedlichen Innen bzw. Außendurchmessern eine Adapterfunktion dadurch erfüllen, dass sich der Innendurchmesser des Stützkörpers sich von dem einen stimseitigen Ende zum anderen stimseitigen Ende hin aufweitet. Der Übergang vom kleineren zum größeren Durchmesser kann hierbei stufig oder aber auch kontinuierlich erfolgen.

Das Steckstück kann aber auch so ausgebildet werden, dass es an einem Ende einen außen umlaufenden erfindungsgemäß ausgebildeten Dichtwulst aufweist und am anderen Ende zur Abdichtung gegenüber einer äußeren Zylinderfläche, z. B. der Außenfläche eines in dieses Ende einsteckbaren rohrförmigen Hohlkörpers, geeignet ist. Zu diesem Zweck kann an dem zweiten Ende des Stützkörpers anstelle eines außen umlaufenden Dichtelementes ein auf dem Innenumfang umlaufendes, radial nach innen weisendes zweites Dichtelement vorgesehen sein. Bei engen Einbauräumen ist es hierbei vorteilhaft, wenn das erste und das zweite Dichtelement in der gleichen Axialebene liegen. Dies hat den Vorteil, dass das Steckstück als Verbindungselement keinen zusätzlichen Bauraum beansprucht, da die rohrförmigen Hohlkörper übereinander geschoben werden können.

Ein erfindungsgemäßes Steckstück kann zusätzlich noch Staublippen aufweisen, um das Eindringen von Staub zu verhindern.

Ebenfalls können an sich bekannte Zentrierlippen oder Zentriemocken vorgesehen sein, die das Steckstück zusätzlich in der Bohrung zentrieren.

Um den Halt in einer Bohrung zu verstärken, können auch Rückhaltelippen, die sich beim Herausziehen in der Bohrung verkrallen, vorgesehen sein.

Gemäß einer weiteren Ausführungsform der Erfindung ist der Stützkörper auf seinem Außen- und/oder Innenumfang wenigstens teilweise mit einer Ummantelung versehen ist. Diese schützt den Stützkörper gegen mechanische und auch chemische Belastungen, die von außen einwirken könnten. Insbesondere kann die Ummantelung bei Stützkörpem aus Metall als Korrosionsschutz dienen, so dass sekundäre Rostschutzmaßnahmen, wie z. B. das Aufbringen von Lackierungen oder dergleichen vermieden werden.

Vorzugsweise sind die Dichtelemente und die Ummantelung einstückig und ineinander übergehend ausgebildet sind.

Gemäß einer weiteren bevorzugten Ausführungsform der Erfindung weisen die Dichtelemente Einführschrägen auf, um die Montage noch weiter zu vereinfachen. Die Dichtelemente können auch an den stimseitigen Enden des Stützkörpers etwas überstehen.

Der zylinderförmige Stützkörper besteht vorzugsweise aus einem schlagzähen Material, besonders bevorzugt aus einem metallischen Werkstoff. Damit ist die Dimensionsstabilität des Stützkörpers und insbesondere die der Durchgangsöffnungen gewährleistet.

Die Dichtelemente und die Ummantelung bestehen vorzugsweise aus einem gummielastischen Werkstoff, besonders bevorzugt aus einem Elastomer oder PTFE. Im Falle eines elastomeren Werkstoffs sind die Dichtwülste bzw. die Ummantelung vorzugsweise auf die Stützhülse aufvulkanisiert. Hierdurch wird ein absolut dichter Verbund zwischen dem Elastomer und der Verbindungshülse erzielt.

Nachfolgend wird de Erfindung anhand der Zeichnung näher erläutert.

### Kurzbeschreibung der Zeichnung

Es zeigen:
- Fig. 1:: in einer schematischen Längsschnittdarstellung und in einer perspektivischen 3D-Darstellung ein erfindungsgemäßes Steckstück mit Dichtwülsten an beiden Stirnseiten die auf der Dichtfläche eine wellenförmige Rillierung aufweisen;
- Fig. 2:: das Steckstück aus Fig. 1 mit einer lamellenförmigen Rillierung;
- Fig. 3:: in einer schematischen Längsschnittdarstellung ein erfindungsgemäßes Steckstück mit kugelförmigen Dichtwülsten an beiden Stirnseiten, deren Kugelmittelpunkt auf der Symmetrieachse des Stützelements liegt und die auf der Dichtfläche eine wellenförmige Rillierung aufweisen;
- Fig. 4:: das Steckstück aus Fig. 3 mit einer lamellenförmigen Rillierung;
- Fig. 5:: in einer schematischen Längsschnittdarstellung ein erfindungsgemäßes Steckstück mit einem Dichtwulst an einer Stirnseite und einem nach innen weisenden Dichtelement an der anderen Stirnseite, die beide in einer Radialebene liegen, wobei der Dichtwulst auf der Dichtfläche eine wellenförmige Rillierung aufweist;
- Fig. 6:: das Steckstück aus Fig. 5 mit einer lamellenförmigen Rillierung;
- Fig. 7:: in einer schematischen Längsschnittdarstellung ein erfindungsgemäßes Steckstück mit einem kugelförmigen Dichtwulst mit wellenförmiger Rillierung an einer Stirnseite, wobei der Kugelmittelpunkt auf der Symmetrieachse des Stützelements liegt, und einem nach innen weisenden Dichtelement an der anderen Stirnseite, wobei beide Dichtelemente in einer Radialebene liegen;
- Fig. 8:: das Steckstück aus Fig. 7 mit einer lamellenförmigen Rillierung;
- Fig. 9:: das Steckstück aus Fig. 3 mit Adapterfunktion;
- Fig. 10:: das Steckstück aus Fig. 3 mit Zentriemocken;
- Fig. 11:: das Steckstück aus Fig. 3 mit Staublippen;
- Fig. 12:: das Steckstück aus Fig. 5 mit Staublippen;
- Fig. 13: das Steckstück aus Fig. 5 mit Zentriemocken;

### Ausführung der Erfindung

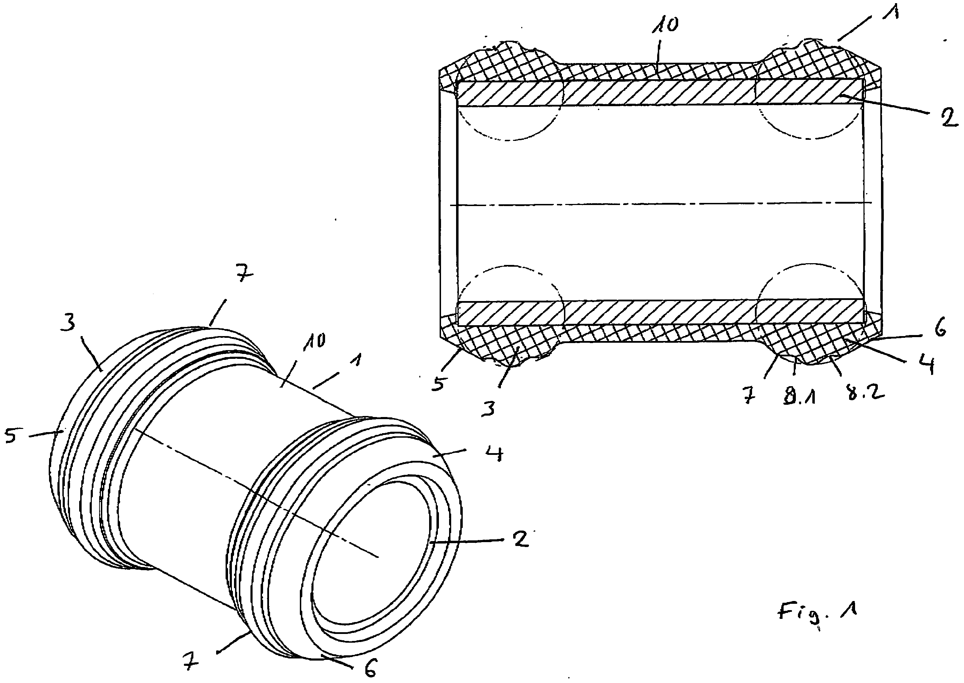

Man erkennt in Fig. 1 ein Ausführungsbeispiel eines erfindungsgemäßen Steckstücks 1 mit einem Stützkörper 2, an dessen beiden Enden auf dem Außenumfang Dichtwülste 3 und 4 umlaufen. Die Dichtwülste 3 und 4 sind zueinander spiegelsymmetrisch ausgebildet, das Steckstück 1 hat dadurch die Gestalt einer Hantel. Die Dichtwülste 3 und 4 weisen ohne Beschränkung der Allgemeinheit in der dargestellten Ausführungsform Einführschrägen 5 und 6 auf, die die Montage erleichtern sollen. Weiterhin stehen die Dichtwülste 3 und 4 an beiden Enden axial nach außen etwas über.

In der Figur sind die Dichtwülste 3 und 4 kugelförmig ausgebildet. Zur Verdeutlichung ist der Kugelradius als strichpunktierte Linie mit eingezeichnet. Auf der gewölbten Oberfläche, welche die Dichtfläche bildet, sind die Dichtwülste 3 und 4 gemäß der Erfindung im Bereich der Dichtfläche mit einer im Längsschnitt wellenförmigen Rillierung 7 versehen. Bei der dargestellte Ausführungsform umfasst die Rillierung jeweils zwei Rillen 8.1, 8.2 (zur besseren Übersichtlichkeit und aufgrund der Symmetrie der Dichtwülste ist in dieser und auch in den folgenden Figuren nur ein Dichtwulst mit den entsprechenden Bezugszeichen versehen).

Gleiche Bezugszeichen bezeichnen in den Figuren gleiche Teile.

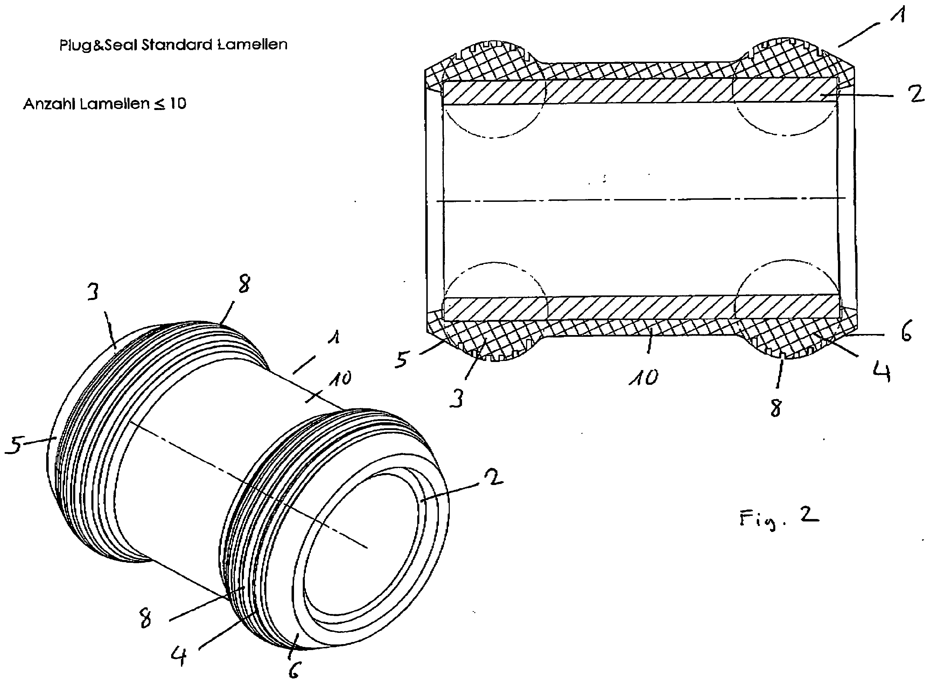

Fig. 2 zeigt ein weiteres Ausführungsbeispiel eines Steckstücks gemäß der Erfindung. Bei dem dargestellten Steckstück 1 ist wird die Rillierung durch eine lamellenartige Struktur 8 gebildet, bei welcher die Dichtwülste 3, 4 im Längsschnitt im Bereich der Dichtfläche die Kontur eines orthogonalen Mäanders aufweisen.

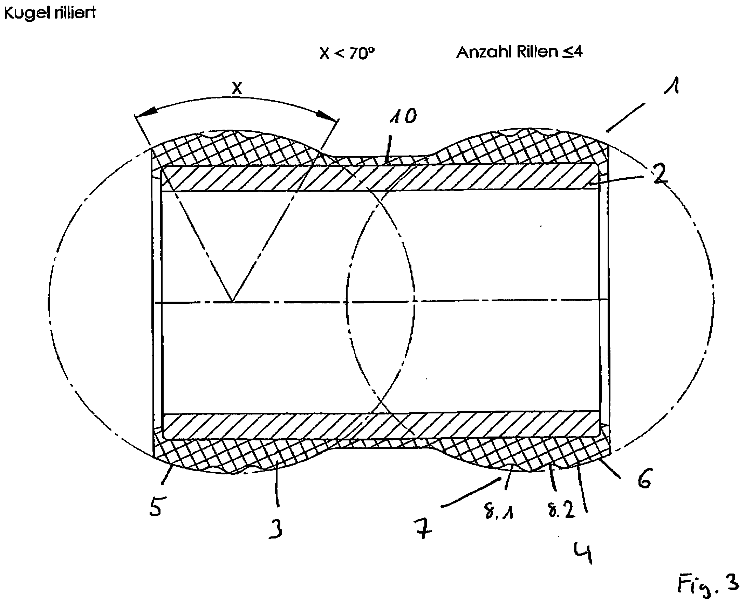

Fig. 3 zeigt ein Ausführungsbeispiel, bei welchem der Kugelradius der Dichtwülste 3, 4 so gewählt, dass, wie man anhand der strichpunktiert eingezeichneten Radien leicht sieht, der Kugel-Mittelpunkt in etwa auf der Symmetrieachse des Stützkörpers liegt. In diesem Fall sind die Anpresskräfte unabhängig von der Winkelstellung über die gesamte Oberfläche der Dichtwülste 3, 4 konstant. In dieser Figur, wie auch in den übrigen Figuren ist das Steckstück 1 weiterhin auf dem Außenumfang mit einer Ummantelung 10 umgeben, die ohne Beschränkung der Allgemeinheit mit den Dichtelementen 3, 4 einstückig und materialeinheitlich ausgebildet ist.

Im Längsschnitt stellt sich der kugelförmige Dichtwulst als Kreissegment mit dem Mittelpunktswinkel "X" dar. Das dargestellte Ausführungsbeispiel zeigt eine wellenförmige Rillierung 7.

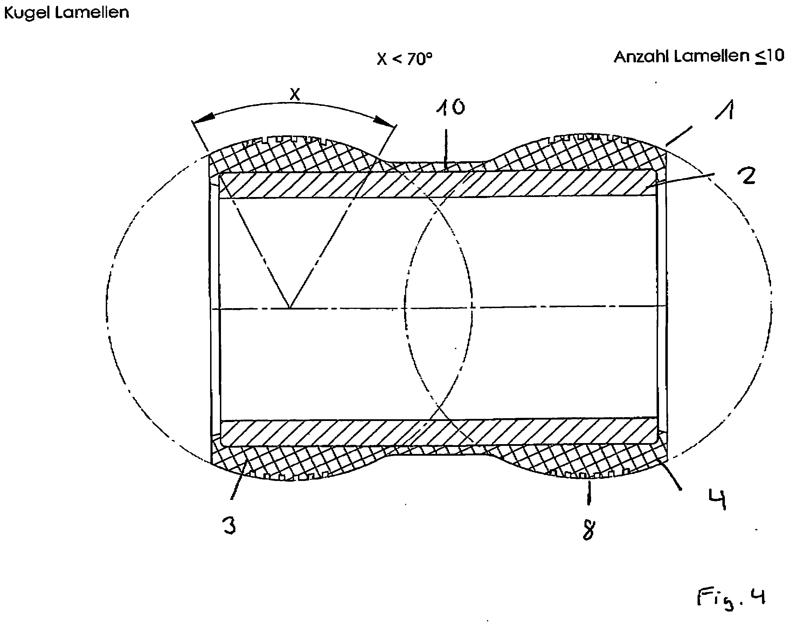

Das in Fig. 4 gezeigte Ausführungsbeispiel entspricht dem in Fig. 3 dargestellten, weist aber im Unterschied zu diesem eine lamellenförmige Rillierung auf.

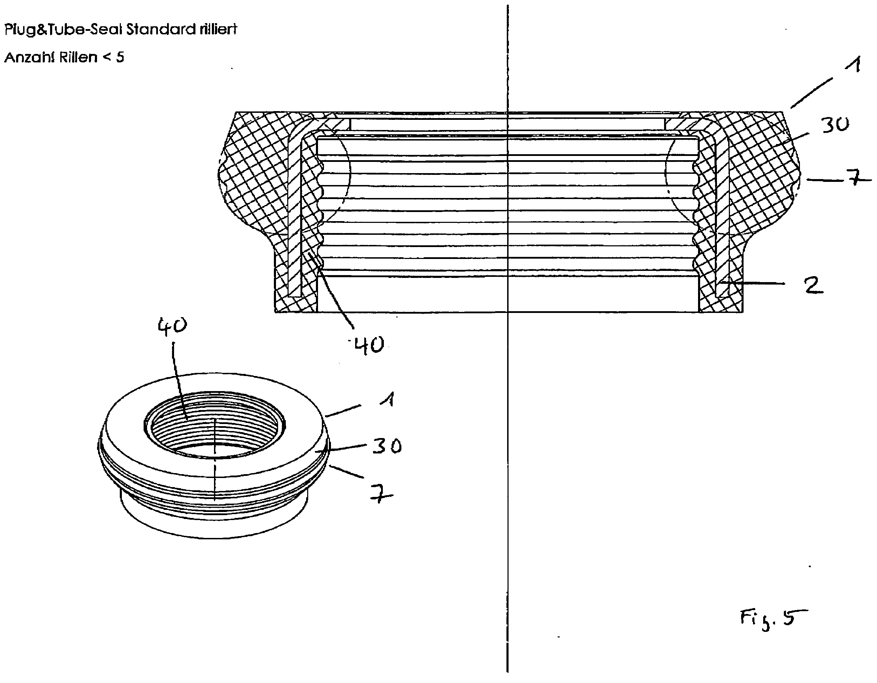

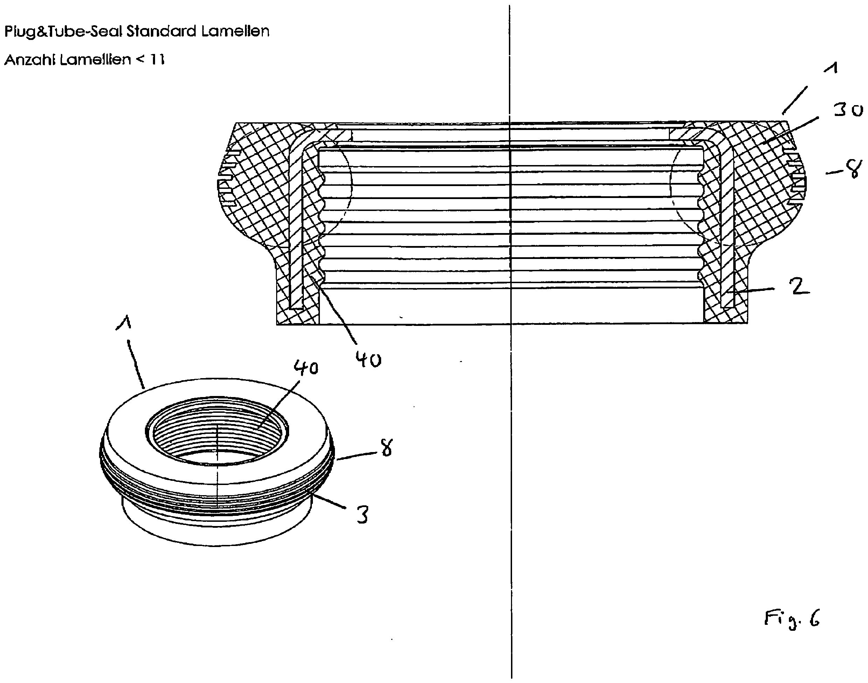

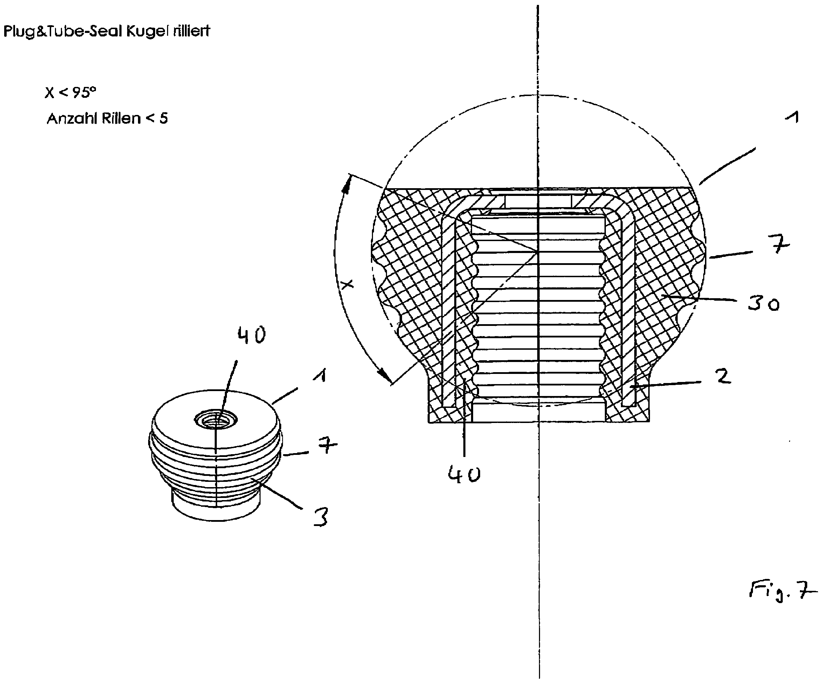

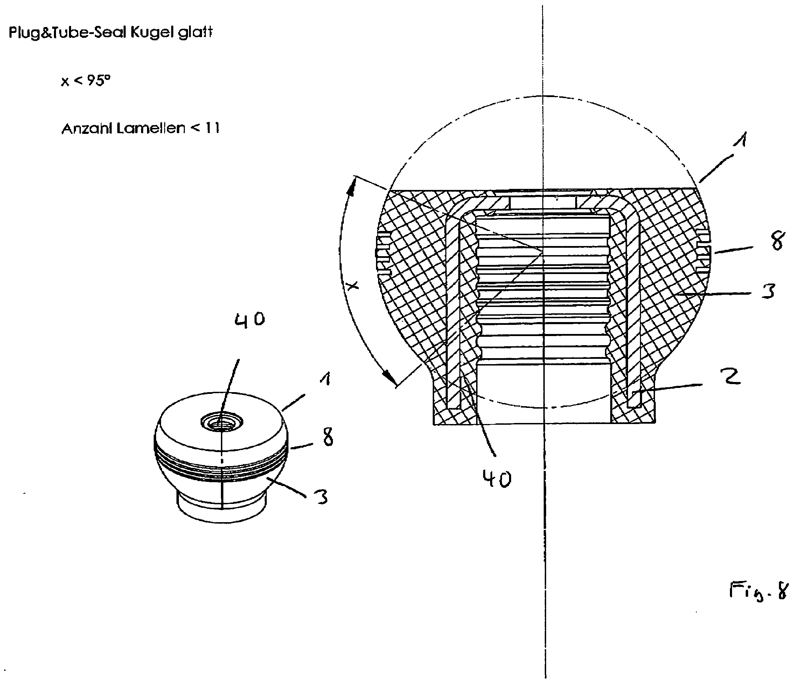

Die in den Figuren 5 bis 8 dargestellten Ausführungsbeispiele weisen jeweils nur an einer Stirnseite des Stützkörpers 2 einen außen umlaufenden Dichtwulst 30 auf. Der Dichtwulst 30 ist in den Figuren jeweils kugelförmig ausgebildet, wobei die gewölbte Dichtfläche in den Figuren 5 und 7 mit einer wellenförmigen Rillierung 7 und in den Figuren 6 und 8 mit einer lamellenförmigen Rillierung 8 versehen ist. An der Stirnseite des anderen Endes des Stützkörpers 2 ist jeweils ein umlaufendes, radial nach innen weisendes zweites Dichtelement 40 vorgesehen. Dieses Ende des Steckstücks 1 ist zur Abdichtung gegenüber der Außenfläche eines in dieses Ende einsteckbaren rohrförmigen Hohlkörpers geeignet. Ohne Beschränkung der Allgemeinheit liegen bei den dargestellten Ausführungsformen das erste 30 und das zweite Dichtelement 40 in der gleichen Radialebene. Dies hat den Vorteil, dass das Steckstück 1 als Verbindungselement keinen zusätzlichen Bauraum beansprucht, da die zu verbindenden Zylinderflächen, d. h. die rohrförmigen Hohlkörper, übereinander geschoben werden können. Die beschriebenen Ausführungsbeispiele eignen sich daher insbesondere für enge Bauräume.

Bei den in den Figuren 7 und 8 dargestellten Ausführungsbeispielen liegt der Kugel-Mittelpunkt, analog zu den Ausführungsbeispielen in den Figuren 3 und 4 in etwa auf der Symmetrieachse des Stützkörpers 2.

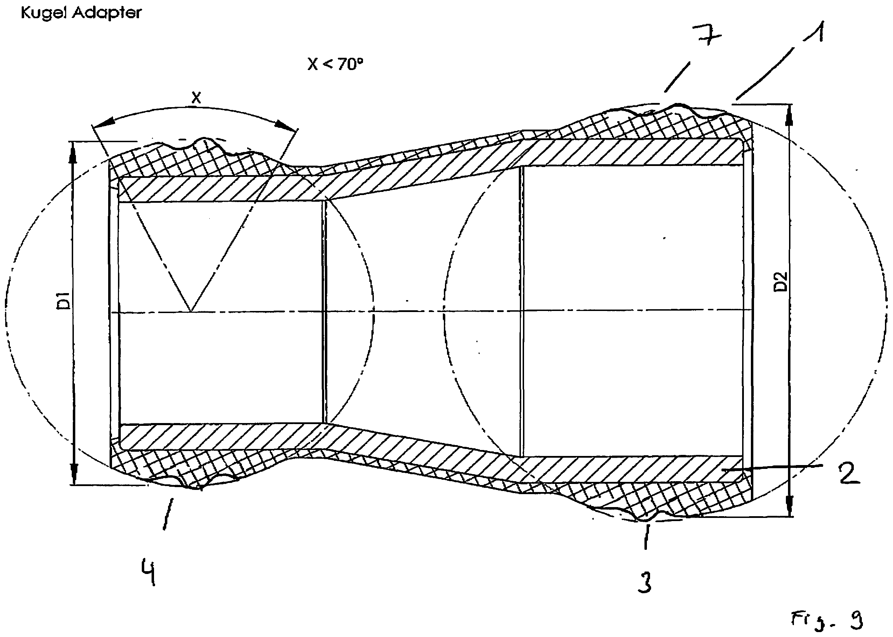

Das Ausführungsbeispiel aus Fig. 9 ist wieder hantelförmig ausgebildet mit zwei umlaufenden kugelförmigen Dichtwülsten 3, 4 mit einer wellenförmigen Rillierung an den jeweiligen Stirnseiten des Stützkörpers 2. Es besitzt nicht nur eine Verbindungs- sondern auch noch eine Adapterfunktion, da der Innendurchmesser des Stützkörpers 2 sich von dem einen stimseitigen Ende zum anderen stimseitigen Ende hin konisch aufweitet. Dieses Steckstück 1 ist zur Verbindung von Zylinderflächen mit unterschiedlichen Innendurchmessern geeignet.

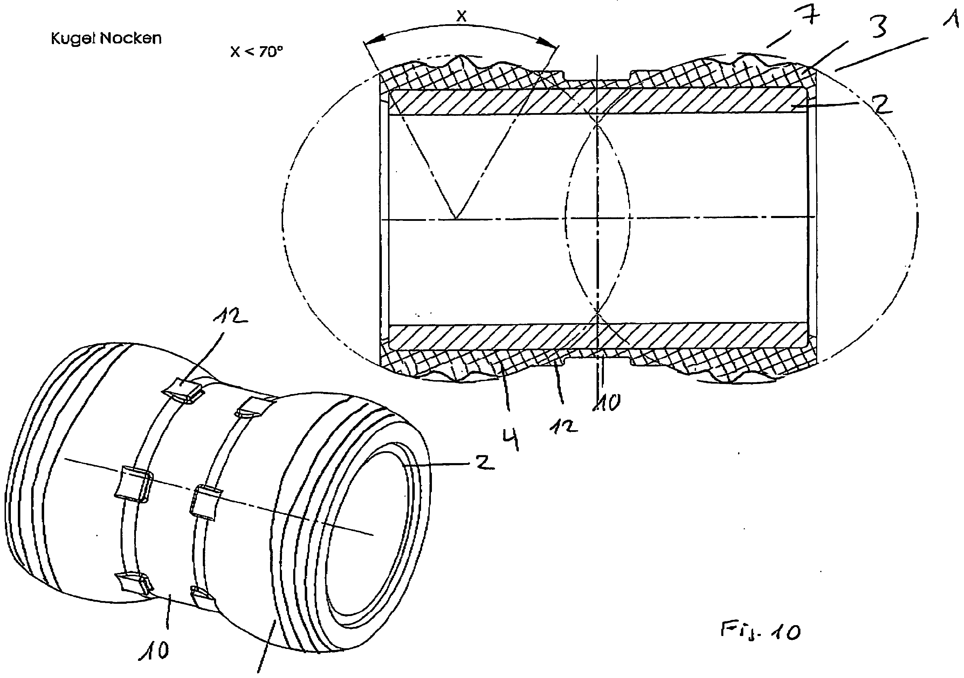

Das in Fig. 10 dargestellte Steckstück 1 entspricht dem in Figur 3 dargestellten. Es weist aber zusätzlich auf seinem Außenumfang in ringförmig umlaufenden Bereichen verteilt angeordnete Zentriernocken 12 auf. Diese haben die Aufgabe, sich an die abzudichtende Zylinderfläche anzulegen, um das Steckstück 1 beim Einbau in den ersten Einbauraum zu zentrieren. Damit wird das Aufstecken in den zweiten Einbauraum erleichtert Zentrienocken 12 sind daher besonders hilfreich, wenn mehrere Steckstücke 1 gleichzeitig montiert werden sollen oder bei Blindmontage.

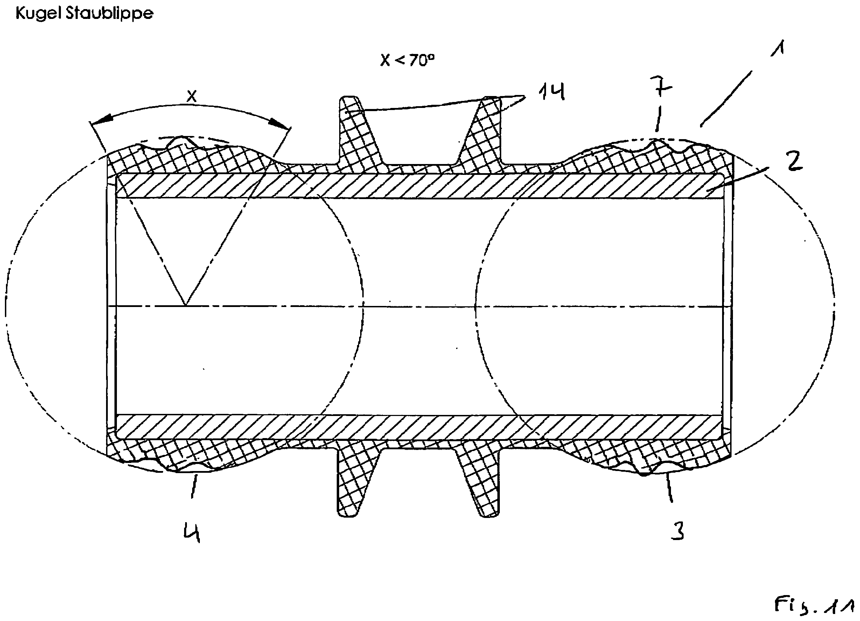

Das Ausführungsbeispiel aus Fig. 11 entspricht ebenfalls dem aus Fig. 3. Es weist zusätzlich Staublippen 14 auf. Die Staublippen 14 halten Verunreinigungen von außen von den Dichtwülsten fem.

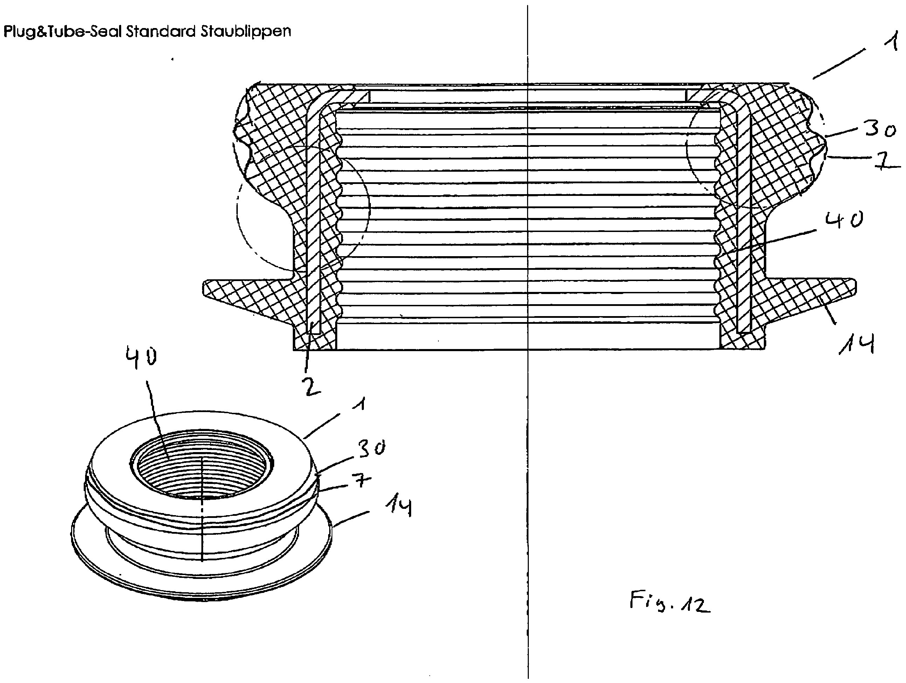

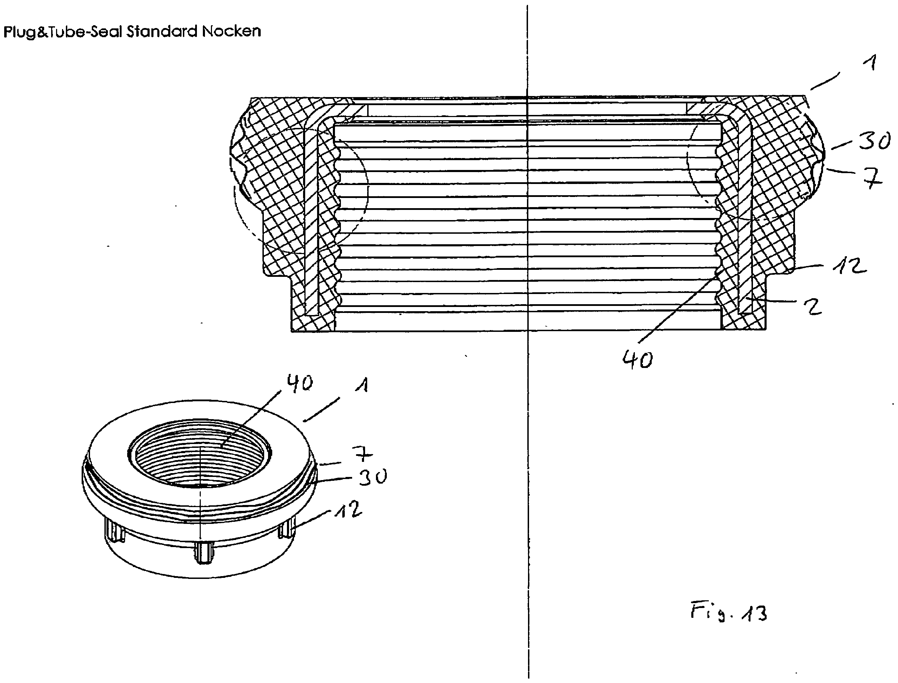

Die Ausführungsbeispiele aus den Figuren 12 und 13 entsprechen dem in Fig. 5 dargestellten, sind aber darüber hinaus noch mit Staublippen 14 (Fig. 12) bzw. Zentriernocken 12 (Fig. 13) ausgerüstet.

## Patentansprüche

1. Steckstück (1) zum dichtenden Verbinden zweier einander zugeordneter Zylinderflächen, umfassend einen im Wesentlichen hohlkörperförmigen Stützkörper (2), welcher wenigstens ein ringförmig umlaufendes Dichtelement aufweist, das zur Herstellung einer dichten Verbindung mit einer der abzudichtenden Zylinderflächen in Eingriff bringbar ist, wobei das Dichtelemente als auf der Außenfläche des Stützkörpers ringförmig umlaufender Dichtwulst (3) mit einer gewölbten Dichtfläche ausgebildet ist, **dadurch gekennzeichnet, dass** der ringförmig umlaufende Dichtwulst (3, 30) im Bereich der gewölbten Dichtfläche eine seiner Kontur folgende umlaufende Rillierung aufweist, wobei die Rillierung im Bereich der die Dichtfläche bildenden gewölbten Oberfläche des Dichtwulstes (3, 30) eingebracht ist.

2. Steckstück nach Anspruch 1, **dadurch gekennzeichnet, dass** die Rillen so ausgebildet sind, dass der Wulst im Längsschnitt eine wellenförmige Außenkontur (7) aufweist.

3. Steckstück nach Anspruch 1 oder 2, **dadurch gekennzeichnet dass** der Dichtwulst (3, 30) kugelförmig ausgebildet ist.

4. Steckstück nach Anspruch 3, **dadurch gekennzeichnet, dass** der Kugelradius des Dichtwulstes (3, 30) so gewählt ist, dass der Kugel-Mittelpunkt in etwa auf der Symmetrieachse des Stützkörpers (2) liegt.

5. Steckstück nach Anspruch 4, **dadurch gekennzeichnet, dass** die Abweichung des Kugelmittelpunkts von der Symmetrieachse weniger als 10 %, besonders bevorzugt nur etwa 2 % des Kugelradius beträgt.

6. Steckstück nach einem der Ansprüche 1 bis 5, **dadurch gekennzeichnet**, an dem zweiten Ende des Stützkörpers (2) ein weiterer, auf dem Außenumfang des Stützkörpers (2) umlaufender Dichtwulst (4) vorgesehen ist.

7. Steckstück nach Anspruch 6, **dadurch gekennzeichnet, dass** es eine Hantelform aufweist, wobei der erste (3) und der zweite Dichtwulst (4) an den beiden Enden zueinander spiegelbildlich ausgebildet sind.

8. Steckstück nach Anspruch 6, **dadurch gekennzeichnet**, das sich der Innendurchmesser des Stützkörpers (2) sich von dem einen Ende um anderen Ende hin aufweitet.

9. Steckstück nach einem der Ansprüche 1 bis 5, **dadurch gekennzeichnet, dass** an dem zweiten Ende des Stützkörpers (2) ein weiteres, radial nach innen weisendes zweites Dichtelement (40) vorgesehen ist.

10. Steckstück nach Anspruch 9, **dadurch gekennzeichnet, dass** der erste Dichtwulst (30) und das nach innen weisende zweite Dichtelement (40) in der gleichen Axialebene liegen.

11. Steckstück nach wenigstens einem der Ansprüche 1 bis 10, **dadurch gekennzeichnet, dass** der Stützkörper (2) auf seinem Außen- und/oder Innenumfang wenigstens teilweise mit einer Ummantelung (10) versehen ist.

12. Steckstück nach Anspruch 11, **dadurch gekennzeichnet, dass** die Dichtelemente (3, 4, 30, 40) und die Ummantelung (10) einstückig und materialeinheitlich ausgebildet sind.

## Claims

1. Plug-in piece (1) for the sealing connection of two associated cylinder surfaces, comprising a supporting body (2), which is essentially in the form of a hollow body and has at least one annularly encircling sealing element, which, for the purpose of establishing a sealed connection, can be brought into engagement with one of the cylinder surfaces which is to be sealed, wherein the sealing element is designed in the form of a sealing bead (3), which encircles the outer surface of the supporting body in an annular manner and has a curved sealing surface, **characterized in that**, in the region of the curved sealing surface, the annularly encircling sealing bead (3, 30) has a grooved formation which follows the contour of the sealing bead, wherein the grooved formation is provided in the region of the curved surface of the sealing bead (3, 30), said curved surface forming the sealing surface.

2. Plug-in piece according to Claim 1, **characterized in that** the grooves are formed such that the bead has an undulating outer contour (7) in longitudinal section.

3. Plug-in piece according to Claim 1 or 2, **characterized in that** the sealing bead (3, 30) is designed in the form of a sphere.

4. Plug-in piece according to Claim 3, **characterized in that** the radius of the sphere of the sealing bead (3, 30) is selected such that the centre point of the sphere is located approximately along the axis of symmetry of the supporting body (2).

5. Plug-in piece according to Claim 4, **characterized in that** the centre point of the sphere deviates from the axis of symmetry by less than 10%, particularly preferably only approximately 2%, of the radius of the sphere.

6. Plug-in piece according to one of Claims 1 to 5, **characterized in that** the second end of the supporting body (2) is provided with a further sealing bead (4), which encircles the outer circumference of the supporting body (2).

7. Plug-in piece according to Claim 6, **characterized in that** it is of dumbbell form, wherein the first sealing bead (3) and the second sealing bead (4) at the two ends are of mirror-inverted design in relation to one another.

8. Plug-in piece according to Claim 6, **characterized in that** the internal diameter of the supporting body (2) widens from the one end to the other end.

9. Plug-in piece according to one of Claims 1 to 5, **characterized in that** the second end of the supporting body (2) is provided with a further, radially inwardly oriented second sealing element (40).

10. Plug-in piece according to Claim 9, **characterized in that** the first sealing bead (30) and the inwardly oriented second sealing element (40) are located in the same axial plane.

11. Plug-in piece according to at least one of Claims 1 to 10, **characterized in that**, on its outer and/or inner circumference, the supporting body (2) is provided at least to some extent with a sheathing (10).

12. Plug-in piece according to Claim 11, **characterized in that** the sealing elements (3, 4, 30, 40) and the sheathing (10) are formed in one piece and from the same material.

## Revendications

1. Pièce enfichable (1) servant à raccorder de manière étanche deux surfaces cylindriques associées l'une à l'autre, comportant un corps de support (2) sensiblement en forme de corps creux, lequel comprend au moins un élément d'étanchéité périphérique de manière annulaire qui peut être amené en prise avec l'une des surfaces cylindriques à rendre étanches pour réaliser un raccordement étanche, l'élément d'étanchéité étant réalisé sous forme de bourrelet d'étanchéité (3) périphérique de manière annulaire sur la surface extérieure du corps de support, lequel bourrelet d'étanchéité est doté d'une surface d'étanchéité bombée, **caractérisée en ce que** le bourrelet d'étanchéité (3, 30) périphérique de manière annulaire comprend, dans la région de la surface d'étanchéité bombée, un rainurage périphérique suivant son contour, le rainurage étant ménagé dans la région de la surface bombée, formant la surface d'étanchéité, du bourrelet d'étanchéité (3, 30).

2. Pièce enfichable selon la revendication 1, **caractérisé en ce que** les rainures sont formées de telle sorte que le bourrelet présente un contour extérieur ondulé (7) en coupe longitudinale.

3. Pièce enfichable selon la revendication 1 ou 2, **caractérisée en ce que** le bourrelet d'étanchéité (3, 30) est de forme sphérique.

4. Pièce enfichable selon la revendication 3, **caractérisée en ce que** le rayon de sphère du bourrelet d'étanchéité (3, 30) est sélectionné de telle sorte que le centre de sphère se situe approximativement sur l'axe de symétrie du corps de support (2).

5. Pièce enfichable selon la revendication 4, **caractérisée en ce que** l'écart du centre de sphère par rapport à l'axe de symétrie est égal à moins de 10 %, de manière particulièrement préférée égal à seulement approximativement 2 % du rayon de sphère.

6. Pièce enfichable selon l'une quelconque des revendications 1 à 5, **caractérisée en ce qu'**un autre bourrelet d'étanchéité (4) périphérique sur la périphérie extérieure du corps de support (2) est prévu à la deuxième extrémité du corps de support (2) .

7. Pièce enfichable selon la revendication 6, **caractérisée en ce qu'**elle présente une forme d'haltère, le premier (3) et le deuxième bourrelet d'étanchéité (4) étant réalisés de manière à présenter une symétrie spéculaire l'un par rapport à l'autre aux deux extrémités.

8. Pièce enfichable selon la revendication 6, **caractérisée en ce que** le diamètre intérieur du corps de support (2) s'agrandit de l'une des extrémités à l'autre extrémité.

9. Pièce enfichable selon l'une quelconque des revendications 1 à 5, **caractérisée en ce qu'**un autre deuxième élément d'étanchéité (40) tourné radialement vers l'intérieur est prévu à la deuxième extrémité du corps de support (2).

10. Pièce enfichable selon la revendication 9, **caractérisée en ce que** le premier bourrelet d'étanchéité (30) et le deuxième élément d'étanchéité (40) tourné vers l'intérieur se situent dans le même plan axial.

11. Pièce enfichable selon au moins l'une quelconque des revendications 1 à 10, **caractérisée en ce que** le corps de support (2) est doté au moins partiellement d'une enveloppe (10) sur sa périphérie extérieure et/ou intérieure.

12. Pièce enfichable selon la revendication 11, **caractérisée en ce que** les éléments d'étanchéité (3, 4, 30, 40) et l'enveloppe (10) sont réalisés d'une seule pièce et en le même matériau.
